# EUROPÄISCHE PATENTSCHRIFT

(11) **EP 0 524 344 B1**
(45) Veröffentlichungstag und Bekanntmachung des Hinweises auf die Patenterteilung: **08.05.1996**
(21) Anmeldenummer: 91112618.3
(22) Anmeldetag: 26.07.1991
(51) Int. Cl.: G05B 19/414, G05B 19/4155

(54) **Konfigurierbare Werkzeugmaschinensteuerung**
Configurable machine tool control
Commande de machine-outil configurable

(43) Veröffentlichungstag der Anmeldung: 27.01.1993
(73) Patentinhaber: SIEMENS AKTIENGESELLSCHAFT, D-80333 München (DE)
(72) Erfinder: Schussler, Ernest, Dipl.-Ing., W-8520 Erlangen (DE)

(56) Entgegenhaltungen:
- EP-A- 0 233 949
- EP-A- 0 262 922
- EP-A- 0 298 396
- EP-A- 0 304 071
- atp-softwarepraxis, 32(1990), No. 9, Seiten 455-459, LASKOWSKI M.
- atp-softwarepraxis, 32(1990), No. 10, Seiten 509-514, LASKOWSKI M.
- Manufactoring Technology International, 1987, No. 1, Seiten 66-69, Automation Technology Products
- Manufactoring Technology International, 1987, No. 1, Seiten 249-252, Lindsay K.J.

## Beschreibung

Moderne, numerisch geregelte Steuerungssysteme, insbesondere für Werkzeugmaschinen, müssen, um effektiv eingesetzt werden zu können, ein breitgestaffeltes Anwendungsumfeld im Fertigungsbereich abdecken können. Entsprechend unterschiedlich sind die Schwerpunkte der technischen Anforderungen bei lokalen Fertigungsaufgaben gelagert. So kommt es zu der Forderung, den wesentlichen Bestandteilen eines CNC-Systems, dazu gehören die Mensch-Maschine-Kommunikation inklusive Informationsaufbereitung, und die Informationsverarbeitung zur Ansteuerung der Maschine - teilweise unabhängig voneinander - besondere Ausprägungen geben zu können. Die resultierende technische Effektivität eines in einer speziellen Ausprägungsvariante konfigurierten CNC-Steuerungssystems für eine definierte Fertigungsaufgabe wird dann durch die relative Gewichtung der angesprochenen Bestandteile beeinflußt.

Herkömmliche Lösungen zur Bewältigung der beschriebenen Anforderungen greifen zum einen auf spezialisierte CNC-Steuerungen zurück, die jeweils auf die lokalen Fertigungsaufgaben zugeschnitten sind, zum anderen werden universelle CNC-Steuerungssysteme eingesetzt, die über Konfigurationsparameter an die jeweilige Fertigungsaufgabe angepaßt werden. Dies kann beispielsweise dadurch geschehen, daß die dazu verwendete Software für mehrere Technologien ausgeführt ist und durch Setzen von bestimmten Bits eine dieser Technologien ausgewählt wird. Bei einem breiten Anwendungsfeld im Fertigungsbereich, kommt es zu Kombinationsformen beider Varianten, die im allgemeinen zu einer heterogenen Systemlandschaft führen.

Aus dem Aufsatz "Problembezogene Synthese von sequentiellen Steuerungsprogrammen" von Michael Laskowski und Heinz Unbehauen, in atp-softwarepraxis, 32(1990), Nr. 9, Teil 1, Seiten 455 bis 459 und a.a.O Nr. 10, (Teil 2), Seiten 509 bis 514 ist ein wissensbasiertes System zur problemorientierten Synthese von Steuerungsprogrammen bekannt, wobei sich die Modellierung eines sequentiellen Steuerungsprogramms in einer Differenzierung der Zielvorgaben durch Modularisierung vollzieht. Die Synthese der Steuerungsprogramme wird durch eine in einer zentralen Expertensystem-Schale abgelegten Wissensbasis vollzogen. Ein weiterer Aufsatz von Ken J Lindsay, "Expert systems in the CIM enviroment", Manufacturing Technology International, 1987, Europe, No.l, London, GB, Seiten 249 bis 252 sowie der Aufsatz "The disign of a database management system for CIM", ebenfalls Manufacturing Technology International, 1987, Europe, No.l, London, GB, Seiten 66 bis 69 geben einen allgemeinen Überlick über die dabei zum Einsatz gelangenden Techniken der objektorientierten Programmierung, wobei diese im Hinblick auf den Einsatz in flexiblen Fertigungssystemen, insbesondere der Konzeption des Computer-Intergrated-Manufacturing CIM dargestellt werden. Darin wird beschrieben, wie Datenbank-Managementsysteme zur Informationsverteilung in flexiblen Fertigungssystemen aufgebaut werden können, wobei die Informationsverteilung anhand von wissensbasierten Expertensystemen erfolgt.

Aus der EP-0 298 396 ist eine modular aufgebaute numerische Steuerung bekannt, die einmal aufgebaut keine Änderungen in der Konfiguration mehr zuläßt. Die EP-0 304 071 beschreibt eine von einer konkreten Anwendung losgelöste Datenverarbeitungsanlage in einer objektorientierten Systemumgebung, beispielsweise für Textverarbeitung oder Datenbankanwendungen, mit der der Austausch von Daten innerhalb verschiedener Datenverarbeitungsprogramme erleichtert werden soll. Dazu wird das Betriebssystem der Datenverarbeitungsanlage in mehrere Teilbetriebssysteme aufgeteilt.

Die spezialisierte, auf eine Fertigungsaufgabe zugeschnittene CNC-Steuerung fördert zwar die Effektivität der lokalen Informationsverarbeitung, begünstigt aber auch wesentlich die Systemheterogenität, wodurch die Mensch-Maschine-Kommunikation und die Integrationsfähigkeit bei einem breiten Anwendungsumfeld leidet. Die größere Vielfalt universeller CNC-Steuerungssysteme geht Hand in Hand mit einer gesteigerten Systemkomplexität, die bei der Konfiguration auf eine Fertigungsaufgabe meistens zu einem funktionalen Überhang führt, der die lokale Systemeffektivität wiederum schmälert. Bezeichnend für herkömmliche Lösungen ist desweiteren die enge Verknüpfung der Mensch-Maschine-Kommunikation inklusive Informationsaufbereitung mit der Informationsverarbeitung über hierarchische Baumstrukturen, die bei großer Komplexität nur mit erhöhtem Aufwand überschaubar bleiben. Wenn in einem solchen System Funktionen erweitert oder neue hinzugefügt werden sollen, treten in der Regel Schwierigkeiten bei der Einbindung dieser Funktionen in das bestehende System auf, die umso größer sind, je maschinennaher die verwendete Programmiersprache ist.

Aufgabe der Erfindung ist es, eine numerische Maschinensteuerung zu schaffen, die möglichst einfach auf beliebige Anwendungsfälle zugeschnitten werden kann.

Diese Aufgabe wird mit einer konfigurierbaren numerischen Steuerung gelöst, die aus mehreren aufgabenorientierten Einheiten, wie einem numerischen und einem speicherprogrammierbaren Steuerteil, einer Bedienereinheit, einem Kommunikationsbereich mit Netzwerkschnittstelle, etc., mindestens einem, in Soft- oder in Hard- und Software realisierbaren Funktionsobjekt, das eine mindestens einer aufgabenorientierten Einheit zuordbare Funktion ausführen kann, wobei jedes Funktionsobjekt neben einem fakultativen Bedienteil auf jeden Fall einen Prozedurteil und einen Kommunikationsteil aufweist, wobei der Kommunikationsteil Botschaften zwischen dem Prozedurteil und anderen Funktionsobjekten vermitteln kann, mindestens einem Objektmanager zur Verwaltung von mindestens zwei Funktionsobjekten und mindestens einer Datenverarbeitungsanlage (DVA) zur Bearbeitung der Daten der Funktionsobjekte (01-022) und der Objektmanager (OM), wobei die Datenverarbeitungsanlage Bestandteil einer aufgabenorientierten Einheit ist.

Damit kann eine jeweilige Konfiguration der numerischen Steuerung als konkrete Ausprägungsvariante durch die Kombination von Funktionsobjekten realisiert werden.

Mit dieser konfigurierbaren Maschinensteuerung sind bedarfsweise besondere Ausprägungen der Mensch-Maschine-Kommunikation inklusive Informationsaufbereitung und der Informationsverarbeitung möglich, wenn nötig auch unabhängig voneinander. So werden schon bei der Systemauslegung Freiheitsgrade definiert, die es erlauben, zielgerichtete Ausprägungen zur Steigerung der technischen Effektivität vorzunehmen. Ein breites Anwendungsumfeld kann somit ohne funktionalen Überhang in einer homogenen Systemlandschaft abgedeckt werden. Zu diesem Zweck orientiert sich die Realisierung der Werkzeugmaschinensteuerung zunächst an einem logischen Modell, indem die Bestandteile der Werkzeugmaschinensteuerung in aufgabenorientierte Einheiten unterteilt werden, die dann in physikalische Ausprägungsvarianten in Form von Hardware und Software überführt werden. Im konkreten Anwendungsfall der Werkzeugmaschinensteuerung unterscheidet das eingesetzte Modell eine Dialog- und Kommunikationsebene, die für die Mensch-Maschine-Kommunikation inklusive Informationsaufbereitung und die systemübergreifende Kommunikation zuständig ist und eine Ausführungsebene, die die numerische Steuerung und die Maschinenanpaßsteuerung beinhaltet, d.h. im wesentlichen die Informationsverarbeitung. Der interne Kommunikationsbereich dient als Bindeglied zwischen den angesprochenen Elementen, die in ihrer Gesamtheit das Steuerungssystem logisch abbilden.

Ausgehend von diesem Modell wird die physikalische Ausprägung des CNC-Systems abhängig von den Anwendungsanforderungen vorgenommen, indem z.B. die Bereiche Mensch-Maschine-Kommunikation, numerischer Steuerteile und speicherprogrammierbarer Steuerteil als eigenständige modulare Prozessoreinheiten oder auch nur als Prozesse ausgebildet werden. Verfügt die gesamte numerische Steuerung lediglich über eine Datenverarbeitungsanlage bzw. eine Prozessoreinheit, so werden nach einer vorteilhaften Ausbildung der Erfindung alle Funktionsobjekte zu einem Prozeß zusammengefügt, der von der Datenverarbeitungsanlage bzw. der Prozessoranlage verwaltet wird.

Sind mehrere Datenverarbeitungsanlagen bzw. Prozessoreinheiten vorhanden, so können die Funktionsobjekte entsprechend der Leistungsfähigkeit der Datenverarbeitungsanlagen bzw. Prozessoreinheiten zu Prozessen zusammengefaßt werden, wobei jeder Datenverarbeitungsanlage ein Prozeß zugeordnet wird, wobei jedem Prozeß mit mindestens zwei Funktionsobjekten ein Objektmanager zugeordnet ist und wobei eine Schnittstelle zur Vermittlung zwischen den Prozessen bzw. den Objektmanagern vorgesehen ist. Dies ermöglicht eine optimale Ausnützung der jeweiligen Datenverarbeitungsanlage bzw. Prozessoreinheit.

Nach einer weiteren vorteilhaften Ausbildung kann den Funktionsobjekten ein Bedienteil zugeordnet werden, über den sich das Funktionsobjekt gegenüber dem Bediener darstellen kann. Dadurch kann die Bedienoberfläche der numerischen Steuerung optimal an die Bedürfnisse des Anwenders angepaßt werden.

Ein Ausführungsbeispiel der Erfindung ist in der Zeichnung dargestellt und wird im folgenden anhand einer Werkzeugmaschinensteuerung näher erläutert. Dabei zeigen:
- FIG 1: ein Funktionsobjekt,
- FIG 2: eine Zuordnung von Funktionsobjekten zu aufgabenorientierten Einheiten, ......
- FIG 3: eine Zuordnung von Funktionsobjekten bei einer bestimmten Konfiguration einer Werkzeugmaschine,
- FIG 4: eine Ausprägungsvariante einer Werkzeugmaschinensteuerung mit nur einer Datenverarbeitungsanlage,
- FIG 5: eine Ausprägungsvariante einer Werkzeugmaschinensteuerung mit zwei Datenverarbeitungsanlagen,
- FIG 6: eine Ausprägungsvariante einer Werkzeugmaschinensteuerung auf Basis eines herkömmlichen numerischen Steuerteils.

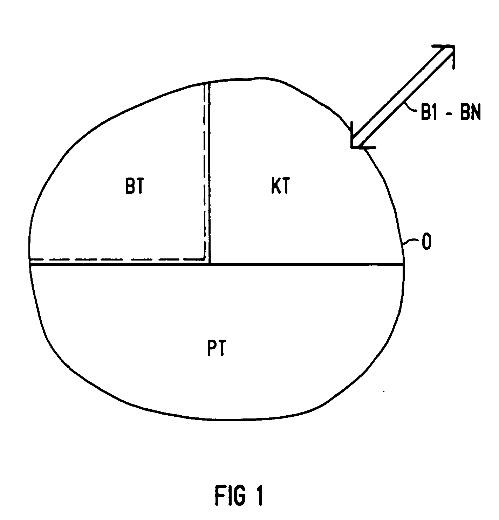

FIG 1 zeigt den prinzipiellen Aufbau eines Funktionsobjektes, das den Grundbaustein für die konfigurierbare numerische Werkzeugmaschinensteuerung bildet. Ein solches Funktionsobjekt kann in Soft- oder in Soft- und Hardware realisiert sein, es hat also zunächst keine konkrete Ausführungsform und ist deshalb (in Anlehnung an die Mengenlehre) durch einen mit Hand gezeichneten Kreis dargestellt. Es verfügt über einen Kommunikationsteil KT und einen Prozedurteil PT und fakultativ über einen Bedienteil BT. Der Prozedurteil PT kann beispielsweise aus einer maschinennahen Software-Prozedur bestehen, die beispielsweise für eine oder mehrere Geometrieberechnungen des numerischen Steuerteils zuständig ist. Diese Berechnungen könnten aber ebenso von einer fest verdrahteten Hardwarelogik ausgeführt werden, so daß der Prozedurteil PT in Hardware realisiert wäre. Die Vermittlung zwischen dem Prozedurteil PT und der Außenwelt des Funktionsobjektes 0 übernimmt der Kommunikationsteil KT. Der Kommunikationsteil KT versteht Botschaften B1-BN die ihm, wie durch den Doppelpfeil angedeutet sein soll, von der Außenwelt, das sind in der Regel die Kommunikationsteile KT anderer Funktionsobjekte 0, übermittelt werden. In einer herkömmlichen Datenverarbeitungsanlage geschieht die Übermittlung dieser Botschaften B1-BN in der Regel über ein Bussystem, wenn die Funktionsobjekte 0 örtlich getrennt sind. Sind jedoch beispielsweise mehrere Softwareobjekte einem Prozeß zugeordnet, so können diese in einem Speicher abgelegt sein, und die Botschaften können innerhalb des Prozesses ausgetauscht werden. Der Kommunikationsteil KT übersetzt die Botschaften B1-BN, die aus sogenannten logischen Daten oder Variablen bestehen, in die - meist maschinennahe - Sprache, die der Prozedurteil PT versteht. Als Vermittler zwischen Prozedurteil PT und Außenwelt muß der Kommunikationsteil nur diejenigen Botschaften B1-BN verstehen, die der Prozedurteil PT - in übersetzter Form - auch ausführen kann. Je nach Mächtigkeit des Prozedurteils PT kann der Kommunikationsteil entweder nur eine oder auch eine Vielzahl von Botschaften B1-BN verstehen. Von den von der Außenwelt ankommenden Botschaften B1-BN, werden von jedem Funktionsobjekt 0 die für es bestimmten Botschaften erkannt und akzeptiert.

Zur Vermittlung zwischen den Kommunikationsteilen KT der Funktionsobjekte 0 wird ein hier nicht gezeigter Objektmanager eingesetzt, dem alle Objekte bekannt sind, der die Botschaften B1-BN der Funktionsobjekte 0 abfragt, an diese verschickt, und koordiniert, und der ggf. für die Synchronität des Botschaftsaustausches sorgt.

Es ist ersichtlich, daß durch eine Vielzahl von Funktionsobjekten 0 alle Aufgaben einer beliebigen Werkzeugmaschinensteuerung abgedeckt werden können. Dabei kann die Werkzeugmaschinensteuerung zur Steuerung einer einfachen Drehmaschine verwendet werden oder auch die Steuerung eines Bearbeitungszentrums umfassen. Sollten zu den bisherigen Aufgaben einer Werkzeugmaschinensteuerung in Zukunft weitere neue Aufgaben hinzukommen, so müssen lediglich ein oder mehrere weitere Funktionsobjekte geschaffen werden.

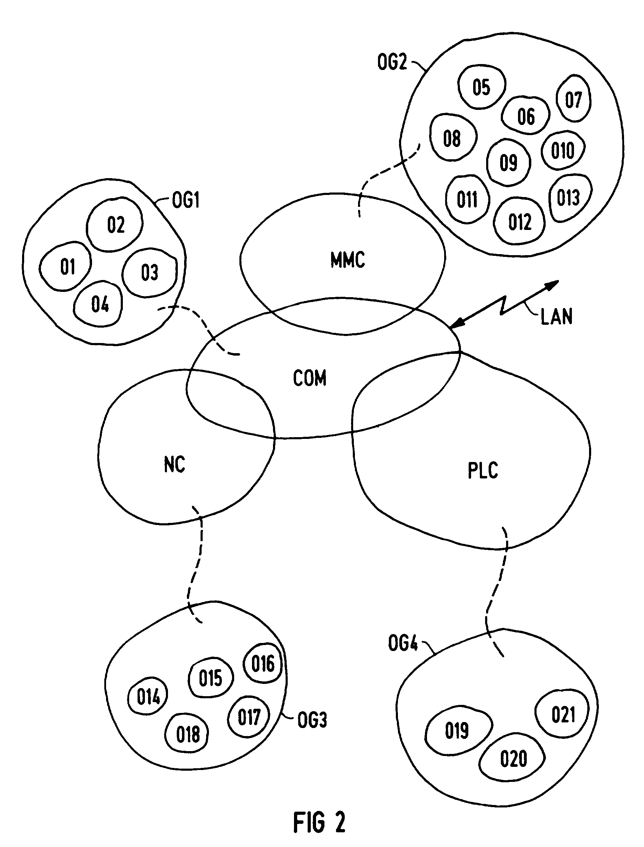

FIG 2 zeigt die Zuordnung von Funktionsobjekten 01-021 zu aufgabenorientierten Einheiten einer Werkzeugmaschinensteuerung. steuerung. In Objektgruppen OG1-OG4 sind alle Funktionsobjekte 01-021, die alle denkbaren Aufgaben einer Werkzeugmaschinensteuerung erfüllen können sollen, zugeordnet. Die Werkzeugmaschinensteuerung ist in ihre logisch gliederbaren, d.h. in die aufgabenorientierten Einheiten zerlegt. Diese Einheiten sind die Mensch-Maschine-Kommunikationseinheit MMC, der Kommunikationsbereich COM, die numerische Steuereinheit NC und die speicherprogrammierbare Steuereinheit PLC. Die Menge aller Funktionsobjekte 01-021 ist in Teilmengen aufgeteilt, die in den Objektgruppen OG1-OG4 zusammengefaßt sind. Diese Aufteilung wurde zunächst aufgabenorientiert vorgenommen, um zu zeigen, daß bestimmte Funktionsobjekte 01-021 oder Objektgruppen OG1-OG4 von ihrer Funktion her bestimmten aufgabenorientierten Einheiten MMC, COM, NC, PLC zuordbar sind. So erfüllen die vier Funktionsobjekte 01-04 der Objektgruppe OG1 die Aufgaben des Kommunikationsbereichs COM, die Funktionsobjekte 05-013 erfüllen die Aufgaben der Mensch-Maschine-Kommunikationseinheit MMC, die Funktionsobjekte 014 bis 018 der Objektgruppe OG3 erfüllen die Aufgaben der numerischen Steuereinheit NC und die Funktionsobjekte 019-021 der Objektgruppe OG4 erfüllen die Aufgaben der speicherprogrammierbaren Steuereinheit PLC. Diese Zuordnung ist in FIG 2 mit gestrichelten Linien von den Objektgruppen OG1-OG4 zu den jeweiligen aufgabenorientierten Einheiten MMC, COM, NC, PLC dargestellt, um zu verdeutlichen, daß die Funktionsobjekte diesen aufgabenorientierten Einheiten nicht auch tatsächlich, d.h. lokal zugeordnet werden müssen. Darauf wird im weiteren noch näher eingegangen.

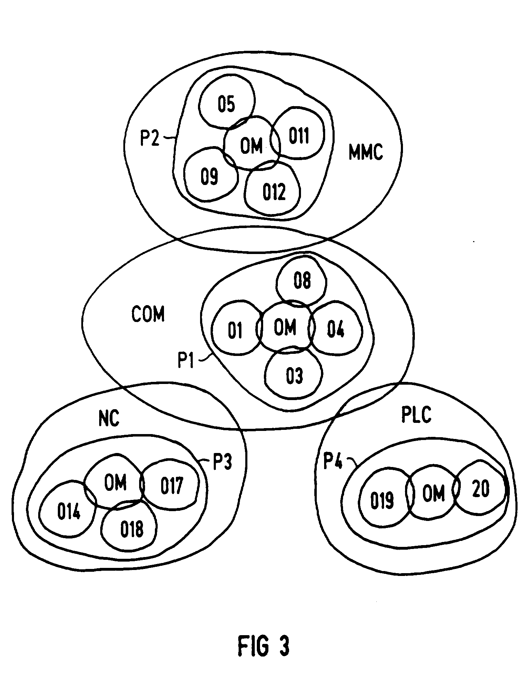

FIG 3 zeigt eine Ausprägungsvariante einer Werkzeugmaschinensteuerung, die durch die Auswahl von Funktionsobjekten aus der Gesamtheit aller Funktionsobjekte 01-021 konfiguriert wurde. Dabei wurden alle für den Kommunikationsbereich COM verfügbaren Funktionsobjekte 01-04 zu einem Prozeß P1 zusammengefaßt. Aus den Funktionsobjekten für die Mensch-Maschine-Kommunikation wurden die Objekte 05,09,011,012 zu einem Prozeß P2 zusammengefaßt. Für den numerischen Steuerteil NC der Werkzeugmaschinensteuerung genügen die Objekte 014,017, 018, die in einem Prozeß P3 zusammengefaßt sind. In einem vierten Prozeß P4 sind die Objekte 019, 020 für den speicherprogrammierbaren Steuerteil zusammengefaßt. Die Verbindung bzw. die Verständigung der Objekte untereinander geschieht, wie anhand von FIG 1 beschrieben, über den Kommunikationsteil KT und den jeweiligen Objektmanager OM der oben ebenfalls bereits beschrieben wurde. Dabei verfügt jeder Prozeß über einen eigenen Objektmanager OM und der Kommunikationsbereich COM stellt die Schnittstelle oder das Interface zwischen den Objektmanagern der aufgabenorientierten Einheiten MMC, PLC und NC dar. Voraussetzung für die Aufgliederung in die Prozesse P1,P2,P5,P4 ist, daß jede aufgabenorientierte Einheit COM,MMC, NC,PLC über eine eigene Datenverarbeitungsanlage bzw. über eine eigene Prozessoreinheit oder ein Steuerwerk etc. verfügt, die bzw. das in der Lage ist, den jeweiligen Prozeß P1,P2, P3,P4 zu bearbeiten.

In FIG 3 wurde die Aufteilung der Funktionsobjekte in die Prozesse P1-P4 noch so vorgenommen, daß jeder aufgabenorientierten Einheit COM,MMC,NC,PLC ein Funktionsobjekt 01...020 zugeordnet wurde, das mindestens eine, dieser Einheit zugeordnete Aufgabe lösen kann. Es kann aber vorkommen, beispielsweise wenn bestehende Hardwarekonfigurationen verwendet werden, daß die verschiedenen aufgabenorientierten Einheiten COM,MMC,NC,PLC über unterschiedlich leistungsfähige Datenverarbeitungsanlagen bzw. Prozessoreinheiten verfügen. In diesem Fall können dann die Funktionsobjekte 01-021 auch anders aufgeteilt werden. Würde beispielsweise die numerische Steuereinheit NC über eine sehr leistungsfähige Datenverarbeitungsanlage verfügen, so könnte von dieser beispielsweise noch das Funktionsobjekt 019 des speicherprogrammierbaren Steuerteils PLC und beispielsweise noch die Funktionsobjekte 05,09 der Mensch-Maschine-Kommunikationseinheit verwaltet werden. Die Funktionsobjekte 05,09 und 019 würden dann in den Prozeß P3 mit eingebunden werden. Es muß dabei nur sichergestellt werden, daß der Kommunikationsteil unter dem jeweiligen Betriebssystem arbeiten kann.

Umgekehrt könnte es auch sein, daß die Funktionen eines bestehenden numerischen Steuerteils bzw. von dessen Datenverarbeitungsanlage erweitert werden sollen, obwohl die Datenverarbeitungsanlage bereits an ihrer Leistungsgrenze liegt. Wenn dann die Datenverarbeitungsanlage einer anderen aufgabenorientierten Einheit, beispielsweise der Mensch-Maschine-Kommunikationseinheit noch Leistungsreserven hat, oder wenn es einfacher ist, eine leistungsfähigere Datenverarbeitungsanlage im Bereich der Mensch-Maschine-Kommunikation zu installieren, könnte diese Datenverarbeitungsanlage noch Funktionsobjekte 01-021 verwalten, die Aufgaben für den numerischen Steuerteil ausführen können. Diese müssen nicht zwangsläufig die neu zum numerischen Steuerteil hinzukommenden Funktionsobjekte sein, sondern können auch bisher vom numerischen Steuerteil verwaltete Funktionsobjekte sein, wenn beispielsweise die neu hinzukommenden Funktionsobjekte aus Gründen der Echtzeitverarbeitung direkt dem numerischen Steuerteil zugeordnet werden müßten.

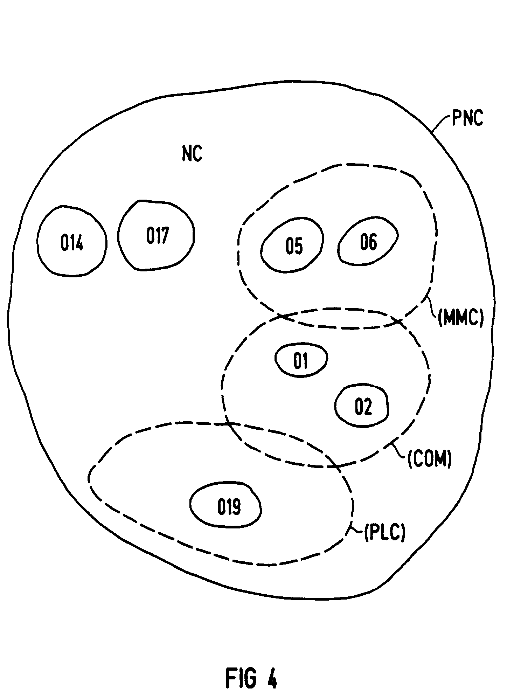

In FIG 4 ist eine Konfiguration einer Werkzeugmaschinensteuerung dargestellt, bei der lediglich der numerische Steuerteil NC über eine Datenverarbeitungsanlage verfügt. Die nicht sehr aufwendige Maschinensteuerung ist mit den Funktionsobjekten 01,02,05,06,014,017,019 realisiert, wobei die Funktionsobjekte 01,02 dem Kommunikationsbereich COM zugeordnete Funktionen, die Funktionsobjekte 05,06 der Mensch-Maschine-Kommunikation MMC zugeordnete Funktionen, die Funktionsobjekte 014,017 dem numerischen Steuerteil NC zugeordnete Funktionen und das Funktionsobjekt 019 dem speicherprogrammierbaren Steuerteil PLC zugeordnete Funktionen ausführen. Da nur der numerische Steuerteil NC über die Datenverarbeitungsanlage verfügt, sind alle Funktionsobjekte 01,02,05,06,014,017,019 in einem Prozeß P_{NC} zusammengefaßt, so daß sowohl der Kommunikationsbereich COM, die numerische Steuerung NC, die speicherprogrammierbare Steuerung PLC und die Mensch-Maschine-Kommunikation MMC durch den Prozeß P_{NC} abgearbeitet werden. Der Objektmanager OM des Prozesses P_{NC} ist der Übersichtlichkeit halber nicht dargestellt.

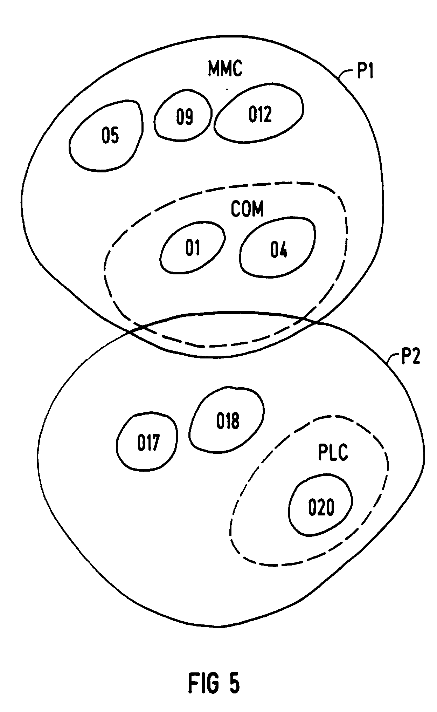

FIG 5 zeigt eine Steuerungskonfiguration, bei der jeweils die Mensch-Maschine-Kommunikationseinheit MMC und die numerische Steuereinheit MC über eine Datenverarbeitungsanlage verfügen. Hier werden wieder zwei Prozesse P1,P2 gebildet, wobei der Prozeß P1 von der Datenverarbeitungsanlage der Mensch-Maschine-Kommunikationseinheit MMC und der Prozeß P2 von der Datenverarbeitungsanlage der numerischen Steuereinheit NC bearbeitet wird. Der Prozeß P1 umfaßt dabei die Funktionseinheiten 05,09, 012, die der Mensch-Maschine-Kommunikationseinheit MMC zugeordnete Funktionen ausführen, sowie die Funktionsobjekte 01,04 die dem Kommunikationsbereich COM zugeordnete Funktionen ausführen. Der Prozeß P2 der numerischen Steuereinheit NC umfaßt die der numerischen Steuereinheit NC zugeordneten Funktionsobjekte 017,018 sowie das der speicherprogrammierbaren Steuereinheit PLC zugeordnete Funktionsobjekt 020. Die Funktionsobjekte 01,04 des Kommunikationsbereichs vermitteln dabei zwischen den beiden Prozessen P1 und P2.

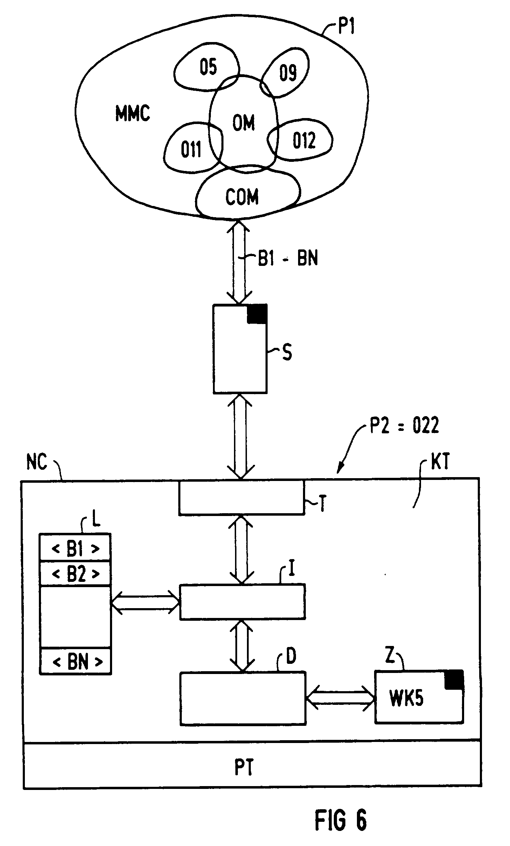

FIG 6 zeigt die Ausprägungsvariante einer Werkzeugmaschinensteuerung, die auf Basis einer ursprünglich nicht funktionsobjektorientierten numerischen Steuerung realisiert wurde.

Bei der numerischen Steuereinheit NC mag es sich um eine herkömmliche numerische Steuerung NC handeln. Dieser Tatsache ist durch die Darstellung in Form eines Blockschaltbildes Rechnung getragen. Dieser herkömmlichen Werkzeugmaschinensteuerung soll nun eine auf Basis von Funktionsobjekten 01-021 beruhende leistungsfähige Mensch-Maschine-Kommunikationseinheit MMC zugeordnet werden. Da die herkömmliche Werkzeugmaschinensteuerung bereits in der Lage ist eine Vielzahl von Prozeduren auszuführen, kann die Summe dieser Prozeduren als Prozedurteil PT (siehe FIG 1) eines Funktionsobjektes 022 angesehen werden. Um ein vollständiges Funktionsobjekt 022 zu erhalten, muß dem Prozedurteil PT, also der Vielzahl der Prozeduren der herkömmlichen numerischen Steuerung ein Kommunikationsteil KT und eventuell ein Bedienteil BT zugeordnet werden. Im Ausführungsbeispiel gemäß FIG 6 wird der Kommunikationsteil KT dadurch realisiert, daß der numerischen Steuerung NC eine Kommunikationstreibereinheit T, ein Interpreter I, eine Liste L mit verschlüsselten Botschaften B1-BN sowie eine Datenfreigabeeinheit D zugeordnet sind. Der Kommunikationstreiber T ist mit einem Speicher, der ein Multiportram sein kann, verbunden. Der zweite Ein- und Ausgang des Speichers S verbindet den Kommunikationsbereich COM, der der Mensch-Maschine-Kommunikationseinheit MMC zugeordnet ist. Der Mensch-Maschine-Kommunikationseinheit MMC sind weiter die Funktionsobjekte 05,09, 011,012 zugeordnet, die mittels des Objektmanagers OM Botschaften untereinander und mit dem Kommunikationsbereich COM austauschen können.

Der Kommunikationsbereich COM erkennt dabei alle Botschaften B1-BN, die einer externen Einheit in diesem Falle also der numerischen Steuereinheit NC zugeordnet sind und übergibt diese Botschaften B1-BN an das Multiportram S. Vom Kommunikationstreiber T der numerischen Steuereinheit NC wird das Multiportram S beispielsweise zyklisch abgefragt und alle ankommenden Botschaften werden über den Treiber T an den Interpreter I weitergeleitet. In der dem Interpreter I zugeordneten Liste L sind zu den Botschaften, die von der numerischen Steuereinheit NC verarbeitet werden können, die entsprechenden maschinennahen Daten abgelegt. Dies ist durch die spitzen Klammern, in denen die Bezugszeichen für die Botschaften B1-BN stehen, symbolisiert. Das zur jeweiligen Botschaft B1-BN gehörige Datum wird vom Interpreter aus der Liste L gelesen und an die Datenfreigabe D weitergeleitet. Über dieses Datum wird dann eine bestimmte Speicherzelle Z angesprochen, in der der Wert steht, der über die bestimmte Botschaft abgefragt wurde. Dieser Wert, im Beispiel die Werkzeugkorrektur WK5, wird auf dem umgekehrten Weg über die Datenfreigabeeinheit D, den Interpreter I, den Treiber T in eine Speicherzelle des Multiportram S geschrieben und kann dort von der Kommunikationsbereich COM abgefragt und als Botschaft B1-BN an den Kommunikationsteil KT des betreffenden Funktionsobjektes 05,09,011,012 weitergegeben werden.

## Patentansprüche

1. Konfigurierbare numerische Steuerung bestehend aus
1.1 mehreren aufgabenorientierten Einheiten, wie einem numerischen (NC) und einem speicherprogrammierbaren (PLC) Steuerteil, einer Bedienereinheit (MMC), einem Kommunikationsbereich (COM) mit Netzwerkschnittstelle (LAN), etc.
1.2 mindestens einem in Soft- oder in Hard- und Software realisierbaren Funktionsobjekt (01-022), das eine mindestens einer aufgabenorientierten Einheit zuordbare Funktion ausführen kann, wobei
1.2.1 jedes Funktionsobjekt (01-022) neben einem fakultativen Bedienteil (BT) einen Prozedurteil (PT) und einen Kommunikationsteil (KT) aufweist, wobei der Kommunikationsteil (KT) Botschaften zwischen dem Prozedurteil (PT) und anderen Funktionsobjekten vermitteln kann,
1.3 mindestens einem Objektmanager (OM) zur Verwaltung von mindestens zwei Funktionsobjekten (01-022),
1.4 mindestens einer Datenverarbeitungsanlage (DVA) zur Bearbeitung der Daten der Funktionsobjekte (01-022) und der Objektmanager (OM), wobei die Datenverarbeitungsanlage (DVA) Bestandteil einer aufgabenorientierten Einheit ist.

2. Werkzeugmaschinensteuerung nach Anspruch 1, wobei alle für die Steuerung vorgesehenen Funktionsobjekte (01-022) als Prozeß (P1) einer Datenverarbeitungsanlage zugeordnet sind.

3. Werkzeugmaschinensteuerung nach Anspruch 1, wobei mindestens zwei aufgabenorientierte Einheiten über je eine Datenverarbeitungsanlage (DVA) verfügen, wobei alle für die Steuerung vorgesehenen Funktionsobjekte (01-022) entsprechend der Leistungsfähigkeit der Datenverarbeitungsanlagen (DVA) zu Prozessen (P1,P2) zusammengefaßt werden, wobei jeder Datenverarbeitungsanlage (DVA) ein Prozeß (P1,P2) zugeordnet wird, wobei jedem Prozeß (P1,P2) mit mindestens zwei Funktionsobjekten (01-021) ein Objektmanager (OM) zugeordnet ist, und wobei ein Kommunikationsbereich (COM) zur Vermittlung zwischen den Prozessen (P1,P2) bzw. den Objektmanagern (OM) vorgesehen ist.

4. Werkzeugmaschinensteuerung nach einem der vorstehenden Ansprüche, wobei mindestens ein Funktionsobjekt (01-022) einen Bedienteil (BT) aufweist über den sich das Funktionsobjekt gegenüber dem Bediener darstellen kann.

## Claims

1. Configurable numerical control comprising
1.1 a multiplicity of task-oriented units, such as a numerical control section (NC) and a stored-program control section (PLC), an operator unit (MMC), a communications area (COM) with network interface (LAN) etc.
1.2 at least one functional object (01-022) which can be constructed in software or in hardware and software and which can perform a function assigned to at least one task-oriented unit,
1.2.1 every functional object (01-022) having not only an optional operating section (BT), but also a procedural section (PT) and a communications section (KT), the communications section (KT) being able to switch messages between the procedural section (PT) and other functional objects,
1.3 at least one object manager (OM) for managing at least two functional objects (01-022),
1.4 at least one data processing system (DPS) for handling the data of the functional objects (01-022) and the object managers (OM), the data processing system (DPS) being a constituent of a task-oriented unit.

2. Machine tool control according to Claim 1, wherein all the functional objects (01-022) provided for the control are assigned as a process (P1) to a data processing system.

3. Machine tool control according to Claim 1, wherein at least two task-oriented units each have a data processing system (DPS), wherein all the functional objects (01-022) provided for the control are combined to form process (P1, P2) in accordance with the efficiency of the data processing systems (DPS), wherein a process (P1, P2) is assigned to each data processing system (DPS), wherein an object manager (OM) is assigned to each process (P1, P2) with at least two functional objects, and wherein a communications area (COM) is provided to facilitate communication between the processes (P1, P2) or the object managers (OMs).

4. Machine tool control according to one of the preceding claims, wherein at least one functional object (01-022) has an operating section (BT) via which the functional object can be represented to the operator.

## Revendications

1. Commande numérique configurable, constituée de
1.1 plusieurs unités spcécialisées pour des tâches, comme par exemple une partie de commande numérique (NC) et une partie d'automate industriel programmable (PLC), une unité de commande (MMC), une zone de communication (COM) avec des interfaces (LAN) à un réseau, etc.,
1.2 au moins un objet fonctionnel (01 à 022) qui peut être réalisé sous forme logicielle ou sous forme matérielle et logicielle et qui peut mettre en oeuvre une fonction pouvant être associée à au moins une unité spécialisée pour des tâches,
1.2.1 chaque objet fonctionnel (01 à 022) ayant, outre une partie de commande facultative (BT), une partie de procédure (PT) et une partie de communication (KT), la partie de communication (KT) pouvant transmettre des messages entre la partie de procédure (PT) et d'autres objets fonctionnels,
1.3 au moins un gestionnaire (OM) d'objets destinés à gérer au moins deux objets fonctionnels (01 à 022),
1.4 au moins une installation de traitement de données (DVA) destinée à traiter les données des objets fonctionnels (01 à 022) et des gestionnaires (OM) d'objets, l'installation de traitement de données (DVA) faisant partie d'une unité spécialisée pour des tâches.

2. Commande de machine-outil suivant la revendication 1, dans laquelle tous les objets fonctionnels (01 à 022) prévus pour la commande sont associés, en tant que processus (P1), à une installation de traitement de données.

3. Commande de machine-outil suivant la revendication 1, dans laquelle au moins deux unités spécialisées pour des tâches disposent chacune d'une installation de traitement de données (DVA), tous les objets fonctionnels (01 à 022) prévus pour la commande étant réunis, suivant le rendement des installations de traitement de données (DVA), en des processus (P1,P2), un processus (P1, P2) étant associé à chaque installation de traitement de données (DVA), un gestionnaire (CM) d'objets étant associé à chaque processus (P1, P2) comportant au moins deux objets fonctionnels (01 à 021) et une zone de communication (COM) étant prévue pour la transmission entre les processus (P1,P2) ou les gestionnaires (CM) d'objets.

4. Commande de machine-outil suivant l'une des revendications précédentes, dans laquelle au moins un objet fonctionnel (01 à 022) comporte une partie de commande (BT), au moyen de laquelle l'objet fonctionnel peut se représenter par rapport à l'utilisateur.
